# EUROPEAN PATENT SPECIFICATION

(11) **EP 2 642 864 B1**
(45) Date of publication and mention of the grant of the patent: **30.07.2014**
(21) Application number: 11774039.9
(22) Date of filing: 21.10.2011
(51) Int. Cl.: A23F 3/16

(54) **METHOD FOR STORING A PACKAGED LIQUID TEA PRODUCT**
VERFAHREN ZUR AUFBEWAHRUNG EINES VERPACKTEN FLÜSSIGEN TEEPRODUKTS
PROCEDE DE STOCKAGE D'UN PRODUIT A BASE DE THE LIQUIDE EMBALLE

(30) Priority: 26.11.2010 EP 10192656
(43) Date of publication of application: 02.10.2013
(73) Proprietor: Unilever PLC, London EC4Y 0DN (GB); Unilever N.V., 3013 AL Rotterdam (NL)
(72) Inventor: MYCOCK, Gary, NL-3133 AT Vlaardingen (NL); SMITH, Alistair, David, Bedford Bedfordshire MK44 1LQ (GB); WOOLLEY, Helen, Jane, Bedford Bedfordshire MK44 1LQ (GB)
(74) Representative: Askew, Sarah Elizabeth
(86) International application number: PCT/EP2011/068429
(87) International publication number: WO 2012/069261

(56) References cited:
- WO-A2-2009/059927
- GB-A- 968 423
- DATABASE WPI Week 200647 Thomson Scientific, London, GB; AN 2006-454783 XP002637989, & CN 1 718 030 A (LANCANGJIANG BEER ENTERPRISE CO LTD) 11 January 2006 (2006-01-11)
- DATABASE WPI Week 198624 Thomson Scientific, London, GB; AN 1986-154974 XP002636507, & SU 1 194 361 A (TEA IND RES INST) 30 November 1985 (1985-11-30)

## Description

### TECHNICAL FIELD OF THE INVENTION

The present invention relates to packaged liquid products for diluting to prepare beverages. In particular the present invention relates to such products which comprise expressed tea juice.

### BACKGROUND TO THE INVENTION

Beverages based on the tea plant *(Camellia sinensis)* have been popular throughout the world for hundreds of years. Traditionally such beverages are produced by infusing tea leaves in hot water and separating the aqueous plant extract from the remaining insoluble plant material.

Today such beverages can be prepared by more convenient methods which dispense with the need for manipulation of insoluble plant material by the end-user or consumer. In particular, the beverages can be prepared from instant powders, granules or liquid concentrates which can be conveniently dissolved and/or diluted in water.

Juice expressed from tea leaves (rather than extracted from leaves with a solvent) is found to produce beverages having organoleptic properties different from those produced from conventional liquid tea concentrates.

International patent application published as WO 2009/059927 (Unilever) discloses a process for manufacturing one such tea juice wherein the process comprises the steps of: providing fresh tea leaves comprising catechins; macerating the fresh tea leaves thereby to produce dhool; fermenting the dhool for a fermentation time sufficient to reduce the content of catechins in the dhool to less than 50% of the content of catechins in the fresh tea leaves prior to maceration on a dry weight basis; and then expressing juice from the fermented dhool thereby to produce leaf residue and tea juice, wherein the amount of expressed juice is at least 50 ml per kg of the fresh tea leaves.

Thus there is a need to package tea juice wherein the packaged juice remains stable upon storage for extended periods.

Surprisingly we have found that unless tea juice is subjected to carefully controlled conditions of temperature and time, the tea solids in the juice become unstable and can become insoluble, subject to sedimentation or even undergo chemical changes that give rise to unpleasant off-flavours or aromas.

### TESTS AND DEFINITIONS

### Tea

"Tea" for the purposes of the present invention means material from *Camellia sinensis.*
"Green tea" refers to substantially unfermented tea. "Black tea" refers to substantially fermented tea. "Oolong tea" refers to partially fermented tea.
"Fermentation" refers to the oxidative and hydrolytic process that tea undergoes when certain endogenous enzymes and substrates are brought together by mechanical disruption of the cells by maceration of the leaves. During this process colourless catechins in the leaves are converted to a complex mixture of yellow and orange to dark-brown polyphenolic substances.
"Fresh tea leaves" refers to tea leaves and/or stem that have never been dried to a water content of less than 30% by weight, and usually have a water content in the range 60 to 90%.
"Tea juice" refers to juice squeezed out from fresh tea leaves using physical force, as opposed to extracts produced by extraction of tea solids with the use of a solvent.

### Storing

"Storing" refers to keeping a product in a packaged state, i.e. without allowing the package to be compromised such that it becomes permeable to microbiological contaminants.

### Miscellaneous

Except in the examples, or where otherwise explicitly indicated, all numbers in this description indicating amounts of material or conditions of reaction, physical properties of materials and/or use may optionally be understood as modified by the word "about".

All amounts are by weight of the final product, unless otherwise specified.

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

### SUMMARY OF THE INVENTION

The present invention provides a method for storing a packaged liquid product, wherein the liquid product comprises expressed tea juice and has a total tea solids content of at least 4% by weight of the liquid product, the method comprising storing the packaged liquid product for a storage period of at least two weeks wherein the packaged liquid tea product is not subjected to a temperature exceeding 37 °C for more than 10 days during the storage period.

### DETAILED DESCRIPTION

During the storage period of the present invention, the liquid product is packaged, by which is meant that the liquid product is contained within a sealed package. In particular the package is sealed to ensure that the package is impermeable to microbiological contaminants by which is meant that the packaged product can be stored for at least 6 months at a temperature of 20°C without the amount of spore-forming bacteria *(Bacillus* and *Clostridia spp)* in the liquid product increasing above 100 cfu / ml. Suitable packages include sachets, capsules, cartons or bottles.

From the point of view of cost and convenience of storage and/or packaging, it is preferred that the package is a sachet Sachets are typically formed from flexible packaging material. The most preferred packaging material being plastic-foil laminate material, especially material comprising a metal (such as aluminium) foil layer sandwiched between two or more plastic (such as polyethylene terephthalate, polyethylene, polypropylene or combinations thereof) layers. Most preferred are plastic-foil laminate materials comprising a metal foil layer having a thickness of at least 5 microns, most preferably the foil layer has a thickness of from 6 to 10 microns.

The product of the present invention is stored for a storage period of at least two weeks, although the product may be stored for longer periods and still remain stable if the temperature is controlled according to the limits of the present invention. Thus it is preferred that the storage period is at least 1 month, more preferably at least 2 months and most preferably from 3 months to 1 year. The product may be held in one location during the storage period or it may be transported between locations (e.g. from a warehouse to a retail outlet) for at least part of the storage period. Preferably the mean temperature of the liquid product averaged over the storage period is between 1 and 37 °C, more preferably in the range 5 to 35 °C, more preferably still in the range 7 to 30 °C and most preferably from 10 to 27 °C.

To prevent the formation of off-flavours and noticeable sedimentation in the liquid product, we have found that it is necessary to ensure that the packaged liquid tea product is not subjected to a temperature exceeding a maximum temperature for more than a maximum time during the storage period. The maximum temperature is 37 °C and the maximum time is 10 days. Preferably the maximum temperature is 35 °C, more preferably 30 °C, and most preferably 27 °C. Preferably the maximum time at the maximum temperature is 7 days, more preferably 5 days.

Although storage at too high a temperature is found to have the most detrimental effects on the quality of liquid products comprising tea juice, we have also found that if the liquid product is subjected to too low a temperature then quality can also be compromised. In particular storage at too low a temperature can lead to sedimentation and/or phase separation in the liquid product. Thus it is preferred that the packaged liquid tea product is not subjected to a temperature below a minimum temperature for more than a maximum time during the storage period. Preferably the minimum temperature is 5 °C, more preferably 7 °C and most preferably 10 °C. Preferably the maximum time at the minimum temperature is 10 days, more preferably 7 days and most preferably 5 days.

The liquid product of the present invention is a beverage precursor and is suitable for dilution with an aqueous liquid to provide a beverage. Thus the liquid product comprises tea solids in an amount of at least 4% by weight of the liquid product. The high level of tea solids may account, to some extent for the instability of the product outside of the specified storage temperature range. Thus the present invention may be especially effective with liquid tea products containing even higher amounts of tea solids. In particular it is preferable that the liquid product comprises total tea solids in an amount of at least 5% by weight of the product, more preferably at least 6%. Preferably the amount of tea solids is not too high otherwise stability or portionability may be adversely affected. Thus it is preferred that the liquid product comprises less than 20% tea solids by weight of the product, more preferably less than 15% and most preferably less than 10%.

The method of the present invention provides for stable storage of the liquid composition. In particular it is preferred that the method is such that at the end of the storage period at least 90% by weight of the total tea solids are soluble, more preferably at least 92% and most preferably from 95 to 100%.

The package preferably contains a unit dose of the liquid product suitable for dilution to prepare a beverage. In this respect the amount of liquid product in the package is preferably from 4 to 18 cm³, more preferably from 5 to 15 cm³ and most preferably from 6 to 14 cm³.

The liquid product comprises expressed tea juice. Owing to the unique organoleptic properties of tea juice it is preferred that at least 50% by weight of the tea solids are provided by the tea juice, more preferably at least 75% and most preferably from 90 to 100%.

The liquid product may comprise black tea juice, green tea juice or a combination thereof.

Tea juices tend to have a lower proportion of gallated species in the polyphenols than conventional tea extracts.

Where the product comprises black tea juice, the product preferably comprises theaflavins and the weight ratio of theaflavin (TF1) to theaflavin digallate (TF4) is at least 2.0, more preferably at least 3.0, more preferably still at least 3.2 and most preferably from 3.5 to 5.0. Additionally or alternatively the amount of TF1 in the total theaflavins in the liquid product is preferably at least 40% by weight, more preferably at least 42% by weight and most preferably from 45 to 60%. Suitable methods for determining theaflavin contents can be found, for example in the International patent application published as WO 2009/059927 (Unilever).

Where the product comprises green tea juice, the product preferably comprises catechins and has a weight ratio of non-gallated catechins to gallated catechins of greater than 1.4:1, more preferably greater than 1.6:1, more preferably still greater than 1.8:1 and most preferably from 3:1 to 20:1. Methods of measuring gallated and non-gallated catechin contents can be found, for example in the International patent application published as WO 2010/037768 (Unilever).

Gallated polyphenols are considered to some extent to be the polyphenols most prone to reaction and sedimentation. Thus it is somewhat surprising that liquid compositions comprising tea juice show instability if not stored in a controlled manner as specified by the present invention.

In one embodiment the liquid product is tea juice and is substantially free from other ingredients. However, it may be desirable to include auxiliary ingredients in the liquid product such as flavours, diluents (e.g. water), biopolymers or combinations thereof.

The storage period is preferably the period immediately prior to use of the liquid product by a consumer. Thus it is preferred that at the end of the storage period the package is opened and the liquid product is contacted with a diluent liquid, preferably water. Since the liquid composition is relatively rich in tea solids, it can usually be diluted many-fold whilst still imparting tea flavour to the resulting beverage. Thus the liquid product is preferably diluted by a factor of 5 to 50 by weight, more preferable by a factor of 10 to 40 and most preferably by a factor of 15 to 35.

The packaged liquid tea product may be manufactured by any convenient method. However a preferred method comprises the steps of:
(i) expressing tea juice from fresh tea leaves;
(ii) forming an open package;
(iii) dosing a portion of the tea juice into the package; and
(iv) sealing the package.

It is possible that a small amount of solvent (e.g. water) is added to the fresh tea leaves during the expression step (i). However, in order to prevent significant extraction of tea solids by the solvent, the moisture content of the fresh leaves during expression is preferably between 30 and 90% by weight, more preferably between 60 and 90%. Preferably the amount of juice expressed is at least 50 ml per kg of fresh leaves, more preferably from 100 to 800 ml per kg of fresh tea leaves and most preferably from 200 to 600 ml per kg of fresh leaves. The expression step produces leaf residue in addition to the juice and the juice is separated from the leaf residue prior to dosing.

Where the package is a sachet the open package may conveniently be formed by drawing a web of packaging material around a mandrel; sealing the web into a hollow tube by applying a longitudinal seal; and forming a transverse seal in the tube. A particularly suitable such process is a so-called "vertical form-fill-seal" process.

The tea juice may be dosed "as is", i.e. without any dilution. Alternatively the tea juice may be dosed simultaneously or sequentially with one or more auxiliary ingredients.

From the point of view of food hygiene it is preferred that the tea juice and/or the package is subjected to a sanitisation step such as pasteurisation or UHT treatment. For example the tea juice may be sanitised and the sanitised juice dosed into a previously-sanitised open package under sterile conditions. Additionally or alternatively the formed package may be subjected to a santisation step, for example by in-pack pasteurisation or retorting.

Surprisingly we have found that the degree of heating required to sanitise liquid compositions comprising tea juice need not be high, even where the composition has a low-acid pH (i.e. pH above 4.5). Without wishing to be bound by theory, we believe that the tea solids inhibit the growth of spore-forming bacteria to such a degree that that the use of very high temperatures to eliminate such spore forming bacteria is unnecessary, even at low acid pH.

Thus in a preferred embodiment the tea juice is subjected to a heat treatment at a temperature of between 60 and 100 °C for a time period of between 1 and 20 minutes. More preferably the temperature is between 70 and 90 °C. Additionally or alternatively the time period is between 1 and 10 minutes. The pH (at 20 °C) of the tea juice (or the liquid product comprising the tea juice) which is so heat-treated is preferably greater than 4.5, more preferably from 4.5 to 6.0.

### EXAMPLES

The invention will be further illustrated by reference to the following non-limiting examples.

### Example 1

### Preparation of Packaged Products

Freshly-plucked tea leaves were macerated and the resulting dhool fermented for 1 hour. The dhool was then pressed and the resulting black tea juice clarified by centrifugation. The clarified juice had a total solids content of 8 wt%.

The juice was pasteurised at 80 °C for 3 minutes and then hot-filled into sachets on a vertical form-fill-seal line. Each sachet contained 8 ml of juice and had ~10% headspace volume filled with air.

Three types of packaging material were used for the sachets:
- Material 1 had an outer 43 micron PET layer, a core 8 micron aluminium foil layer and an inner 30 micron LLDPE layer.
- Material 2 had an outer 12 micron PET layer, a core 12 micron Metallised-PET layer and an inner 30 micron LLDPE layer.
- Material 3 had an outer 12 micron PET layer, a core 8 micron aluminium foil layer and an inner 40 micron PP layer.

### Storage of the Products

The packaged products made from material 1 were separated into 3 batches. One batch was stored frozen at a constant temperature of -20 °C (frozen reference). Another batch was stored at a constant temperature of 20 °C. The remaining batch was stored at a constant temperature of 40 °C.

The packaged products made from materials 2 and 3 were each separated into two batches. One batch of each was stored at a constant temperature of 20 °C. The remaining batch of each was stored at a constant temperature of 40 °C.

After 6 months of storage, each batch was equilibrated to 20 °C for 24 hours and then used to prepare beverages for sensory evaluation.

### Sensory Testing

Beverages were prepared by opening the packages and diluting 40 ml of the liquid product in a litre of freshly boiled water, stirring the resulting beverage and then allowing it to cool for 2 minutes. 100 ml of each beverage was served in white china bowls to trained sensory panellists.

Products were assessed by the trained sensory panellists using Quantitative Descriptive Analysis (QDA). The QDA required evaluation of 15 aroma attributes, 7 appearance attributes, 3 taste attributes, 15 flavour attributes, 2 mouthfeel attributes and 2 aftertaste attributes for each beverage. The presentation sequence was randomised and balanced for order and carry-over effects. Over 36 assessments were obtained for each product.

### Results

Table 1 details the significant differences for the samples stored at 20 °C and 40 °C compared to the frozen reference.

**TABLE 1**

| **Pack Material** | **Storage Temperature** | |
|---|---|---|
| | **20 °C** | **40 °C.** |
| 1 | - Higher in green colour. | - Higher in vegetable green aroma and flavour. |
| | - Lower in clarity and brightness. | |
| 2 | - Higher in redness, green colour and darkness. | - Higher in fresh green and vegetable green aroma. |
| | - Lower in yellowness and clarity. | - Higher in darkness. |
| | | - Higher in vegetable green flavour. |
| 3 | - No significant differences. | - Higher in fresh green aroma. |
| | | - Higher in vegetable green aroma and flavour |

It can be seen from these results that the only changes occurring (with reference to the frozen samples) on storage at 20 °C are changes in appearance of the final beverages. In contrast all samples stored at 40 °C developed unpleasant vegetable aromas and flavours. In general the samples stored in packs which had an aluminium layer (packs 1 and 3) were more stable than those stored in the pack without an aluminium layer (pack 2).

### Example 2

It was noted during the trials reported in Example 1 that the tea juice obtained by thawing the frozen reference had undergone visible separation. Thus a further storage trial was conducted to investigate the effects of storage temperature on physical stability of the tea juice itself.

### Preparation of Packaged Products

Freshly-plucked tea leaves were macerated and the resulting dhool fermented for 1 hour. The dhool was then pressed and the resulting black tea juice clarified by centrifugation. The clarified juice had a total solids content of 8 wt%.

The juice was filled into 330 ml aluminium drinks cans which were then sealed. The sealed cans were pasteurised at 75 °C for 5 minutes.

### Storage of the Products

The cans were separated into 4 batches. One batch was stored frozen at a constant temperature of -20 °C. Another batch was stored at a constant temperature of 4 °C. A third batch was stored at a constant temperature of 20 °C. The remaining batch was stored at a constant temperature of 40 °C.

After 14 days of storage, each batch was equilibrated to 20 °C for 24 hours and then subjected to physical testing.

### Physical Testing

Each can was opened and inverted to drain out as much of the contents as possible. The drained contents were visibly examined for evidence of phase separation before being filtered through a 1.6 µm filter (glass microfiber filter Grade GF/A available from Whatman^{™}, Maidstone, Kent, UK). Each filter was weighed before filtering and the amount of suspended solids retained on the filter was determined after evaporation of any remaining water from the filter in an oven for 16 hours at 103 °C. In addition the amount of sedimented solids remaining in the drained cans was determined after evaporation of any remaining water from the cans in an oven for 16 hours at 103 °C.

### Results

Table 2 details the results of the physical testing.

**TABLE 2**

| **Storage T (°C)** | **Suspended Solids (%wt of juice)** | **Sedimented Solids (%wt of juice)** | **Total Insoluble Solids (%wt juice)** | **Visible Separation?** |
|---|---|---|---|---|
| -20 | 0.10 | 0.08 | 0.18 | Yes |
| 4 | 0.11 | 0.29 | 0.39 | Yes |
| 20 | 0.04 | 0.16 | 0.21 | No |
| 40 | 0.11 | 0.67 | 0.79 | No |

It can be seen from these results that the samples stored at 40 °C developed the most amount of insoluble solids. The samples stored at 4 °C also developed significantly more insoluble solids than those stored at -20 or +20 °C. The amount of insoluble solids in the samples stored at -20 and +20°C was similar; however the frozen samples showed visible signs of phase separation.

## Claims

1. A method for storing a packaged liquid product, wherein the liquid product comprises expressed tea juice and has a total tea solids content of at least 4% by weight of the liquid product, the method comprising storing the packaged liquid product for a storage period of at least two weeks wherein the packaged liquid tea product is not subjected to a temperature exceeding 37 °C for more than 10 days during the storage period.

2. The method as claimed in claim 1 wherein the packaged liquid tea product is not subjected to a temperature below 5 °C for more than 10 days during the storage period.

3. The method as claimed in claim 1 or claim 2 wherein the packaged liquid tea product is not subjected to a temperature exceeding 30 °C for more than 10 days during the storage period.

4. The method as claimed in any one of the preceding claims wherein the packaged liquid tea product is not subjected to a temperature exceeding 35 °C for more than 5 days during the storage period.

5. The method as claimed in any one of the preceding claims wherein the packaged liquid tea product is not subjected to a temperature below 7 °C for more than 10 days during the storage period.

6. The method as claimed in any one of the preceding claims wherein the packaged liquid tea product is not subjected to a temperature below 5 °C for more than 5 days during the storage period.

7. The method as claimed in any one of the preceding claims wherein at least 50% by weight of the total tea solids in the liquid product are provided by the expressed tea juice, preferably from 75 to 100%.

8. The method as claimed in any one of the preceding claims wherein the package is selected from a sachet, a capsule, a carton and a bottle.

9. The method as claimed in claim 8 wherein the package is a sachet formed from a plastic-foil laminate material.

10. The method as claimed in any one of the preceding claims wherein at the end of the storage period at least 95% of the total tea solids are soluble.

11. The method as claimed in any one of the preceding claims, wherein at the end of the storage period the package is opened and the liquid product is contacted with a diluent liquid.

12. The method as claimed in any one of the preceding claims comprising the steps of:
(i) expressing tea juice from fresh tea leaves;
(ii) forming an open package;
(iii) dosing a portion of the tea juice into the package;
(iv) sealing the package; and
(v) storing the packaged liquid product for the storage period.

13. The method as claimed in claim 12 wherein the tea juice and/or the packaged liquid product is subjected to a sanitisation step prior to storage.

14. The method as claimed in claim 13 wherein the sanitisation step comprises heating the tea juice at a temperature of between 60 and 100 °C for a time period of between 1 and 20 minutes.

15. The method as claimed in claim 14 wherein the tea juice has a pH of greater than 4.5.

## Patentansprüche

1. Verfahren zum Aufbewahren eines abgepackten flüssigen Produktes, wobei das flüssige Produkt ausgepressten Teesaft aufweist und einen Gesamtgehalt an Teefeststoffen von mindestens 4 Gew.-% des flüssigen Produktes hat,
wobei das Verfahren das Aufbewahren des abgepackten flüssigen Produktes für einen Aufbewahrungszeitraum von mindestens 2 Wochen aufweist, wobei das abgepackte flüssige Teeprodukt während des Aufbewahrungszeitraums keiner Temperatur für mehr als 10 Tage ausgesetzt wird, die 37 °C übersteigt.

2. Verfahren nach Anspruch 1,
wobei das abgepackte flüssige Teeprodukt während des Aufbewahrungszeitraums keiner Temperatur für mehr 10 Tage ausgesetzt wird, die weniger als 5 °C beträgt.

3. Verfahren nach Anspruch 1 oder 2,
wobei das abgepackte flüssige Teeprodukt während des Aufbewahrungszeitraums keiner Temperatur für mehr als 10 Tage ausgesetzt wird, die 30 °C übersteigt.

4. Verfahren nach einem der vorstehenden Ansprüche,
wobei das abgepackte flüssige Teeprodukt während des Aufbewahrungszeitraums keiner Temperatur für mehr als 5 Tage ausgesetzt wird, die 35 °C übersteigt.

5. Verfahren nach einem der vorstehenden Ansprüche,
wobei das abgepackte flüssige Teeprodukt während des Aufbewahrungszeitraums keiner Temperatur für mehr als 10 Tage ausgesetzt wird, die weniger als 7 °C beträgt.

6. Verfahren nach einem der vorstehenden Ansprüche,
wobei das abgepackte flüssige Teeprodukt während des Aufbewahrungszeitraums keiner Temperatur für mehr als 5 Tage ausgesetzt wird, die weniger als 5 °C beträgt.

7. Verfahren nach einem der vorstehenden Ansprüche,
wobei mindestens 50 Gew.-%, vorzugsweise 75 bis 100 Gew.-% der gesamten Teefeststoffe im flüssigen Produkt vom ausgepressten Teesaft bereitgestellt werden.

8. Verfahren nach einem der vorstehenden Ansprüche,
wobei die Verpackung aus einem Säckchen, einer Kapsel, einem Karton und einer Flasche ausgewählt ist.

9. Verfahren nach Anspruch 8,
wobei die Verpackung ein Säckchen ist, das aus einem Kunststofffolienlaminatmaterial hergestellt ist.

10. Verfahren nach einem der vorstehenden Ansprüche,
wobei am Ende des Aufbewahrungszeitraums mindestens 95 % der gesamten Teefeststoffe löslich sind.

11. Verfahren nach einem der vorstehenden Ansprüche,
wobei am Ende des Aufbewahrungszeitraums die Verpackung geöffnet wird und das flüssige Produkt mit einer verdünnenden Flüssigkeit in Kontakt gebracht wird.

12. Verfahren nach einem der vorstehenden Ansprüche,
das die folgenden Schritte aufweist.
(i) Auspressen von Teesaft aus frischen Teeblättern;
(ii) Herstellen einer offenen Verpackung;
(iii) Dosieren einer Portion des Teesafts in die Verpackung;
(iv) Verschließen der Verpackung und
(v) Aufbewahren des abgepackten flüssigen Produktes für den Aufbewahrungszeitraum.

13. Verfahren nach Anspruch 12,
wobei der Teesaft und/oder das abgepackte flüssige Produkt vor der Aufbewahrung einem Desinfektionsschritt unterzogen werden.

14. Verfahren nach Anspruch 13,
wobei der Desinfektionsschritt das Erwärmen des Teesafts auf eine Temperatur von 60 bis 100 ° für einen Zeitraum von 1 bis 20 Minuten aufweist.

15. Verfahren nach Anspruch 14,
wobei der Teesaft einen pH-Wert von mehr als 4,5 aufweist.

## Revendications

1. Procédé de stockage d'un produit liquide emballé, dans lequel le produit liquide comprend du jus de thé exprimé et a une teneur totale en solides de thé d'au moins 4 % en poids du produit liquide, le procédé comprenant le stockage du produit liquide emballé pendant une période de stockage d'au moins deux semaines durant laquelle le produit à base de thé liquide emballé n'est pas soumis à une température dépassant 37 °C pendant plus de 10 jours durant la période de stockage.

2. Procédé selon la revendication 1, dans lequel le produit à base de thé liquide emballé n'est pas soumis à une température inférieure à 5 °C pendant plus de 10 jours durant la période de stockage.

3. Procédé selon la revendication 1 ou 2, dans lequel le produit à base de thé liquide emballé n'est pas soumis à une température dépassant 30 °C pendant plus de 10 jours durant la période de stockage.

4. Procédé selon l'une quelconque des revendications précédentes, dans lequel le produit à base de thé liquide emballé n'est pas soumis à une température dépassant 35 °C pendant plus de 5 jours durant la période de stockage.

5. Procédé selon l'une quelconque des revendications précédentes, dans lequel le produit à base de thé liquide emballé n'est pas soumis à une température inférieure à 7 °C pendant plus de 10 jours durant la période de stockage.

6. Procédé selon l'une quelconque des revendications précédentes, dans lequel le produit à base de thé liquide emballé n'est pas soumis à une température inférieure à 5 °C pendant plus de 5 jours durant la période de stockage.

7. Procédé selon l'une quelconque des revendications précédentes, dans lequel au moins 50 % en poids du total des solides de thé dans le produit liquide sont fournis par le jus de thé exprimé, de préférence de 75 à 100 %.

8. Procédé selon l'une quelconque des revendications précédentes, dans lequel l'emballage est choisi parmi un sachet, une capsule, un carton et une bouteille.

9. Procédé selon la revendication 8, dans lequel l'emballage est un sachet formé à partir d'un matériau stratifié en feuille plastique.

10. Procédé selon l'une quelconque des revendications précédentes, dans lequel, à la fin de la période de stockage, au moins 95 % du total des solides de thé sont solubles.

11. Procédé selon l'une quelconque des revendications précédentes, dans lequel, à la fin de la période de stockage, l'emballage est ouvert et le produit liquide est mis en contact avec un diluant liquide.

12. Procédé selon l'une quelconque des revendications précédentes comprenant les étapes consistant à :
(i) exprimer du jus de thé à partir de feuilles de thé fraîches ;
(ii) former un emballage ouvert ;
(iii) doser une partie du jus de thé dans l'emballage ;
(iv) sceller l'emballage ; et
(v) stocker le produit liquide emballé pendant la période de stockage.

13. Procédé selon la revendication 12, dans lequel le jus de thé et/ou le produit liquide emballé sont soumis à une étape de purification avant le stockage.

14. Procédé selon la revendication 13, dans lequel l'étape de purification comprend le chauffage du jus de thé à une température comprise entre 60 et 100 °C pendant une période comprise entre 1 et 20 minutes.

15. Procédé selon la revendication 14, dans lequel le jus de thé a un pH supérieur à 4,5.
